## Europäisches Patentamt
## European Patent Office
## Office européen des brevets

(11) Veröffentlichungsnummer: **0 178 335**
**A1**

(12) # EUROPÄISCHE PATENTANMELDUNG

(21) Anmeldenummer: 84112365.6

(51) Int. Cl.⁴: **A 47 L 9/28**

(22) Anmeldetag: 13.10.84

(43) Veröffentlichungstag der Anmeldung:
23.04.86 Patentblatt 86/17

(84) Benannte Vertragsstaaten:
AT BE CH FR GB IT LI LU NL SE

(71) Anmelder: Kurz, Gerhard
Bruckenäcker 11
D-7000 Stuttgart 80(DE)

(72) Erfinder: Kurz, Gerhard
Bruckenäcker 11
D-7000 Stuttgart 80(DE)

(74) Vertreter: Otte, Peter, Dipl.-Ing.
Tiroler Strasse 15
D-7250 Leonberg(DE)

(54) Vorrichtung zur manuellen, pneumatischen Betätigung eines einen elektrischen Motor aufweisenden Staubsaugers.

(57) Vorrichtung zur manuellen, abgestuften Saugleistungs-umschaltung bei einem Staubsauger (1) mit einem Motor (4) mit elektrischer oder elektronischer Drehzahlsteuerung (6), einem vom Motor angetriebenen Gebläse (5) und einem Staubgefäß (3). In dem von der Bedienungsperson erfaßten Handgriff (12) des Staubsaugers ist ein über einen Druckk-nopf (13) willkürlich betätigbarer Drucksender (14) angeord-net, dessen Ausgangsdruckimpulse über eine zum Saug-schlauch (9) des Staubsaugers separate, jedoch dessen Verlauf folgende Steuerschlauchleitung (9a) auf einen druc-kempfindlichen Membranschalter (16) im Inneren des Staub-saugergehäuses (1) übertragen wird, dessen Kontaktgaben dann seinerseits die Drehzahlsteuerung zur Leistungsum-schaltung in eine Anzahl vorgegebener Stufen veranlaßt.

EP 0 178 335 A1

./...

Croydon Printing Company Ltd.

Fig. 2

Dipl.-Ing. **Peter Otte**
Patentanwalt

7250 Leonberg 0178335
Tiroler Straße 15

1829/ot/sei
12.10.1984

Herr Gerhard Kurz, Bruckenäcker 11, 7000 Stuttgart 60

Vorrichtung zur manuellen, pneumatischen Betätigung
eines einen elektrischen Motor aufweisenden Staubsaugers

Stand der Technik

Die Erfindung geht aus von einer Vorrichtung nach der Gattung des Hauptanspruchs. Eine bekannte Vorrichtung dieser Art (DE-OS 24 43 945), die lediglich dem Einschalten oder Ausschalten eines Staubsaugers dient, ist so ausgebildet, daß im Handgriffbereich des Saugschlauchs beispielsweise eines Bodenstaubsaugers ein pneumatischer Drucksender angeordnet ist, der seinem Aufbau nach ein Kolben-Zylinderaggregat ist und bei dem ein federvorgespannter Schubkolben teleskopartig in den Zylinderbereich so weit eindrückbar ist, daß sich ein Verdrängungsluft-Druckimpuls aufbauen kann, der sich über eine separate Steuerschlauchleitung, die längs des Saugschlauchs verläuft und vorteilhafterweise mit diesem integriert ist, bis zum Bodenstaubsauger fortsetzt. Dort wird der Druckluftstoß bis zu einem zweiten Kolben-Zylinderaggregat geführt, bei welchem ein Kolben gegen den Druck einer Vorspannungsfeder aus dem Zylindergehäuse herausgedrückt wird und dabei gleichzeitig eine elektrische Kontaktgabe bewirkt, und zwar dadurch, daß

/2

eine schiefe Ebene am Kolbenschaft einen Stift an einem nicht weiter erläuterten Schaltergehäuse eines einpoligen Umschalters eindrückt. Damit der den Schalter betätigende Stift in dieser eingedrückten Position verbleibt, daher das Gerät auch bei zurücklaufendem Schubkolben im Handgriffbereich eingeschaltet bleibt, ist noch eine Arretieranordnung vorgesehen, die eine Drehklinke enthält, die durch Klemmeingriff den Kolbenstangenrücklauf blockiert. Ausgeschaltet wird dann durch einen weiteren Druckimpuls, durch welchen auch die Arretierklinke wieder in ihre Ruhestellung rückgeführt wird.

Alternativ und entsprechend einem zweiten Ausführungsbeispiel bei der bekannten Vorrichtung treibt ein Faltenbalg über eine Kolbenstange ein ringförmig gelagertes Gleitglied an, welches einen Schwenkstift unter Federvorspannung lagert derart, daß dieser einen schwenkbar gelagerten Schaltarm in seiner Positionsverlagerung so steuert, daß nach jedem zweiten Druckstoß eine Ausgangsstellung wieder erreicht ist.

Abgesehen davon, daß diese bekannte manuelle pneumatische Steuervorrichtung für einen Staubsauger lediglich so ausgelegt ist,und sein kann, daß immer nur eine Einschaltposition und dann wieder die ausgeschaltete Position eingenommen werden kann, ist diese Vorrichtung auch so kompliziert aufgebaut und aufgrund der starken, bei einer jeweiligen Verstellung auf beiden Seiten sich ergebenden Reibungskräfte so unhandlich und schwergängig zu betätigen, daß eine Bedienungserleichterung und eine verbesserte Handhabung eines Staubsaugers im Normalbetrieb nicht erwartet werden kann. Dabei ist noch besonders problematisch, daß

/3

3

die Schaltvorgänge nach zunächst erforderlicher, vielfacher mechanischer Umsetzung der eigentlichen, unter der Druckwirkung erfolgenden Verschiebung im Kolben-Zylinderaggregat oder Faltenbalg letztlich elektrische Kontakte betätigen, die unmittelbar den vollen Laststrom des Staubsaugers schalten. Es ist daher zu befürchten, daß Teilbewegungen bei vom Benutzer nicht zügig aufgebrachter Schubkolbeneinwirkung entweder nicht zur Umschaltung führen oder die Kontakte jedenfalls nicht in ihre vollständige jeweilige Schaltposition gebracht werden können, so daß Funkenübersprünge und/oder ein Schmoren der Kontakte nicht auszuschließen sind.

Ferner ist die mit erheblicher Krafteinwirkung erforderliche Verschiebebewegung des Schubkolbens für bestimmte Benutzer des Staubsaugers möglicherweise schwieriger aufzubringen als das einfache Umlegen eines elektrischen Schalters, wodurch sich für das Ein- oder Ausschalten eines Staubsaugers der gleiche Effekt ergibt.

Es ist daher auch bei einem Bodenstaubsauger bekannt (DE-OS 20 31 647), an der Oberseite des Bodenstaubsaugergehäuses einen auch durch Fußeinwirkung betätigbaren Druckschalter anzuordnen, durch welchen mehrstufige Schaltungen etwa eines im Steuerstromkreis einer drehzahlregelbaren Motorgebläseeinheit liegenden Steuerwiderstandswertes vorgenommen werden können. Die Umschaltung erfolgt durch direkte mechanische Einwirkung zunächst auf den Druckknopf, der über eine Keilfläche durch Einwirkung auf Fortschaltansätze einer Schaltwalze diese in Drehrichtung antreibt. Hierbei ergibt sich dann noch die Notwendigkeit, das endgültige Einlaufen des so betätigbaren Druckschalters in die jeweilige Schaltendposition durch einen weiteren Fortschaltansatz zu bewirken, der erst nach Rückgang des Druckschalters auf Ausnehmungen in der Schaltwalze einwirkt und diese in die gewünschte Endschaltposition zurechtrückt. Hierdurch ist es möglich, in stetig sich wiederholender Folge bestimmte Steuerwiderstandswerte in den Steuerstromkreis des Gebläsemotors zu legen. Dieser bekannte mehrstufige Druckschalter ist zur Fernsteuerung eines Bodenstaubsaugers in seinem Leistungsverhalten vom Handgriff aus nicht geeignet und betrifft auch lediglich nur die Möglichkeit, elektrische Schaltvorgänge durch wiederholtes Betätigen eines Stößels in zyklischem Ablauf durchführen zu können.

Allgemein ist es bei Staubsaugern, beispielsweise für den Haushalts- und Industriebereich, bekannt, diese in der von ihnen jeweils abgegebenen Saugleistung zu steuern oder auch zu regeln, um so einer Anpassung an die jeweiligen Arbeitsbedingungen und den Arbeitsort zu erreichen. Durch die mögliche Leistungsumschaltung eines Staubsaugers kann man diesen, abweichend von der Nenndrehzahl des das Gebläse antreibenden Elektromotors, auch in wirtschaftlichen Bereichen betreiben, so daß sich eine Energieeinsparung und eine mögliche Einstellung auf den jeweiligen Listungsbedarf ergibt, beispielsweise wenn nur leichte Böden oder Gardinen abgesaugt werden müssen.

Bekannt ist ferner eine Vorrichtung zur automatischen Saugleistungssteuerung eines Staubsaugers (DE-OS 31.17 507) bei der im Gehäuse des Staubsaugers ein dem Arbeitsunterdruck ausgesetzter    Unterdruckschalter so angeordnet ist, daß sich je nach Variation des Luftdrucks aufgrund der jeweiligen äußeren Betriebsbedingungen eine Kontaktgabe ergibt, die zu einer Umschaltung in der Drehzahlsteuerung des Staubsaugers führt. Die Umschaltung der jeweiligen Saugleistung in Anpassung an den sich aus der Betriebsbedingung ergebenden Bedarf erfolgt dabei automatisch und stufig, wobei vorzugsweise zwei Unterdruckschalter mit jeweils drei Kontakten vorgesehen sind, so daß ein umfassender Leistungsbereich überstrichen werden kann.

Ferner ist es zur willkürlichen, also manuellen Saugleistungssteuerung bekannt (DE-GM 80 00 772), die Leistungsumschaltungen des Staubsaugers dadurch zu bewirken, daß ein Unterdruckschalter im Staubsaugergehäuse auf ein manuell betätigbares, etwa im Bereich des Handgriffs des Staubsaugerschlauchs angeordnetes und die vom Staubsauger angesaugte Luft zeitweilig über den staubsaugereigenen Saugschlauch absperrendes Ventil reagiert. Angaben über Aufbau und die eigentliche Funktion des Unterdruckschalters sind bei dieser Veröffentlichung nicht gemacht mit der Ausnahme, daß eine möglichst große Hysteresefunktion angestrebt wird, damit nicht schon geringe Druckänderungen in der Saugleitung Umschaltungen in die hier lediglich möglichen zwei verschiedenen Leistungsbereiche bewirken. Problematisch ist bei dieser bekannten manuellen Saugleistungssteuerung noch, daß der Verschluß oder Teilverschluß des Saugschlauchs durch das willkürlich betätigbare Ventil so lange beibehalten werden muß, wie die gewünschte Umschaltung in eine andere (höhere) Leistungsstufe andauern soll. Beim Öffnen der Saugleitung kehrt der Unterdruckschalter in seine Ausgangsstellung zurück. Der Grund hierfür liegt natürlich darin, daß für die Signalgabe die gleiche hier als Steuerstrecke eingesetzte Unterdruckleitung verwendet wird, die auch der Arbeitsleistung im eigentlichen Sinne dient, so daß, wegen der hier untrennbaren Vermischung von Signalstrecke und Leistungsstrecke gegenseitige Beeinflussungen unvermeidlich sind.

Da es einer Bedienungsperson nicht zugemutet werden kann, beispielsweise lediglich zum Ein- und Ausschalten eines Staubsaugers eine so erhebliche Handarbeit zur Betätigung von Kolben-Zylinderaggregaten zu leisten, wie dies bei der eingangs genannten, gattungsbestimmenden Vorrichtung der Fall ist, die aufgrund ihres mechanisch komplizierten Aufbaus aus einer Vielzahl struktureller Einzelheiten und Abdichtmitteln nicht nur besonders umständlich zu betätigen ist sondern auch noch, wenn man die Kompressibilität von Luft als pneumatisches Druckmittel einbezieht, einen entsprechenden Arbeitsaufwand erfordert, liegt der Erfindung die Aufgabe zugrunde, bei einer Vorrichtung zur manuellen Betätigung eines Staubsaugers gewünschte Leistungsumschaltungen durch einfachste und problemlose Einwirkung vom Handgriff aus zu ermöglichen, wobei die jeweiligen Umschaltungen sofort und mit hoher Zuverlässigkeit realisiert werden.

Vorteile der Erfindung

Die Erfindung löst diese Aufgabe mit den kennzeichnenden Merkmalen des Hauptanspruchs und hat den Vorteil, daß sichere und umgehende Leistungsumschaltungen durch die Anordnung einer elektronischen Auswerteinrichtung möglich sind, die unmittelbar eine jeweilige, auf kürzestem Weg erfolgte elektrische Kontaktgabe erfaßt und so umsetzt, daß jede gewünschte Leistungsstufe mit beliebiger stufiger Unterteilung sofort abgerufen werden kann. Dabei stellt es für den Benutzer eine große Hilfe dar, daß parallel zu der jeweils angesteuerten Leistungsstufe eine optische Anzeige erfolgt, so daß zum Erreichen der jeweils gewünschten, speziellen Leistungsstufe sehr schnell weitergeschaltet werden kann, bis der gewünschte Wert erreicht ist.

Dabei ist es ein besonderer Vorteil, daß trotz Benutzung einer separaten Steuerschlauchleitung, die vorzugsweise dem Verlauf des Arbeitsschlauchs folgt, die einzelnen Schaltbetätigungen vollkommen problemlos und anstrengungsfrei erfolgen können, da eine entsprechende Sensorplatte praktisch nur angetippt, nahezu nur berührt zu werden braucht, um eine Umschaltung in eine jeweils nächste Leistungsstufe hervorzurufen. Der Grund hierfür liegt darin, daß beidseitig, also im Bereich des Drucksenders als auch im Bereich des Druckempfängers, die an die Steuerschlauchleitung angeschlossen sind, Membranen vorgesehen und so angeordnet sind, daß schon geringste Druckänderungen in diesem völlig geschlossenen System zur Umschaltung ausgewertet werden können, einmal, weil der Druckempfänger schon auf Druckunterschiede bis hinunter zu 2 mm WS anspricht und zum anderen, weil durch diese, wenn auch nur sehr geringe Membranbewegung unmittelbar eine elektrische Kontaktgabe erfolgt, die zur praktisch leistungsfreien Ansteuerung der elektronischen Auswerteeinrichtung benutzt wird.

Es führt daher auch jede Membranbetätigung im Bereich des Drucksenders zur elektrischen Kontaktgabe, wobei immer die gleichen Kontakte schließen, durch die zyklischen Umschaltmöglichkeiten im Bereich der elektronischen Auswerteeinrichtung hierdurch aber stets unterschiedliche Leistungsstufen für den Gebläsemotor ausgewählt und gleichzeitig optisch angezeigt werden.

8

Darüber hinaus ist vorteilhaft, daß die Einrichtung zur Signalgabe bei einfachstem Aufbau komplikationsfrei ausgebildet und alterungsbeständig ist, wobei schon auf geringste Druckimpulsunterschiede im Übertragungssystem angesprochen wird, da dieses beidseitig über die Membranen abgeschlossen ist und der Steuerdruck-Übertragungsschlauch selbst nur extrem geringe Abmessungen aufweist. Untersuchungen haben ergeben, daß die bei vorliegender Erfindung mit Vorteil verwendete Steuerschlauchleitung besonders dünn und elastisch sein kann, beispielsweise bei einem äußeren Durchmesser von lediglich 2 mm eine innere Durchlaßöffnung von nur 1 mm Querschnitt aufweist und aus einem geeigneten, sehr elastischen Kunststoff besteht. Eine solche sehr dünne und daher auch problemlos zu verlegende und anzuordnende pneumatische Steuerschlauchleitung enthält daher auch nur ein entsprechend geringes Luftvolumen, welches durch ledigliche Membranbetätigung im Bereich des Drucksenders einen vom Druckempfänger auswertbaren Luftdrucksteuerimpuls bis zu diesem übertragen kann. Die Empfindlichkeit der beidseitig verwendeten Membransysteme gewährleistet dabei einwandfreie Funktion und leichteste Bedienung.

Durch die in den Unteransprüchen aufgeführten Maßnahmen sind vorteilhafte Weiterbildungen und Verbesserungen der erfindungsgemäßen Vorrichtung möglich. Besonders vorteilhaft ist die Anordnung eines Schrittschaltrelais hinter dem membrangesteuerten Druckempfänger, so daß die jeweiligen Kontaktgaben im Druckempfänger bei nur sehr geringer elektrischer Leistung für die Relaisumschaltung aufeinanderfolgend jeweils unterschiedliche Relaiskontakte betätigen, wodurch beispielsweise abgestuft Widerstände in den Steuerkreis einer Phasenanschnitt-Drehzahlsteuerung für den elektrischen Antriebsmotor
des Gebläses geschaltet werden können. Auf der Leistungsseite des verwendeten Schrittschaltrelais können dann
beliebige Leistungen geschaltet werden, gleichzeitig kann
hierdurch auch die entsprechende Anzeigeleuchte für die
Leistungsstufe mit angesteuert werden.

Alternativ ist es möglich, dem Druckempfänger einen
elektronischen Zähler nachzuschalten, der im zyklischen
Umlauf jeweils unterschiedliche Ausgänge hochlegt oder
diesem eine Entschlüsseleinrichtung, etwa eine
Diodenmatrix , nachzuschalten ist, die dann die entsprechenden Steuerbefehle selektiv weiterleitet.

(setzt sich fort mit dem 3. Absatz auf Seite 6 der ursprünglichen Unterlagen vom 4. 3. 1983, das heißt mit
dem die Überschrift "Zeichnung" tragenden Kapitel)


Zeichnung

Ausführungsbeispiele der Erfindung sind in der Zeichnung dargestellt und werden in der nachfolgenden Beschreibung näher erläutert. Es zeigen:

Fig. 1 in schematisierter Darstellung einen Staubsauger mit einem
Signaldruckgeber im Handgriffbereich des Staubsaugers,

Fig. 2 mögliche Schaltungsbeispiele auf der Empfängerseite zur
Ansteuerung des Gebläsemotors des Staubsaugers in schematisierter Darstellung und

Fig. 3 ein bevorzugtes Ausführungsbeispiel eines auf die Signaldruckschwankungen ansprechenden und empfängerseitig angeordneten Membranschalters zur Bewirkung elektrischer
Kontaktgaben und Weiterleitung an die Drehzahlsteuerung des
Staubsaugermotors.

Beschreibung der Ausführungsbeispiele

Der Grundgedanke vorliegender Erfindung besteht darin, bei getrennten Druckübertragungswegen durch Anordnung einer separaten Steuerschlauchleitung eine leichtgängige und auch optisch bequem anzuzeigende Mehrfach-Leistungsumschaltung für Staubsauger zu schaffen, wobei die Steuerschlauchleitung willkürliche Steuerbefehle des Benutzers des Staubsaugers an die Drehzahlsteuerung weitergibt und diese in den einzelnen, dann jeweils stufig eingeschalteten Leistungsbereichen gegebenenfalls ergänzend noch Steuersignale in diesem Fall wieder aus den Unterdruckschwankungen des Arbeitsbereichs, also aus durch den Betrieb des Staubsaugers in der üblichen Weise sich ergebene Unterdruckschwankungen gewinnt und im Sinne einer automatischen Leistungsregelung innerhalb der manuell geschalteten Leistungsstufe auswertet und umsetzt.

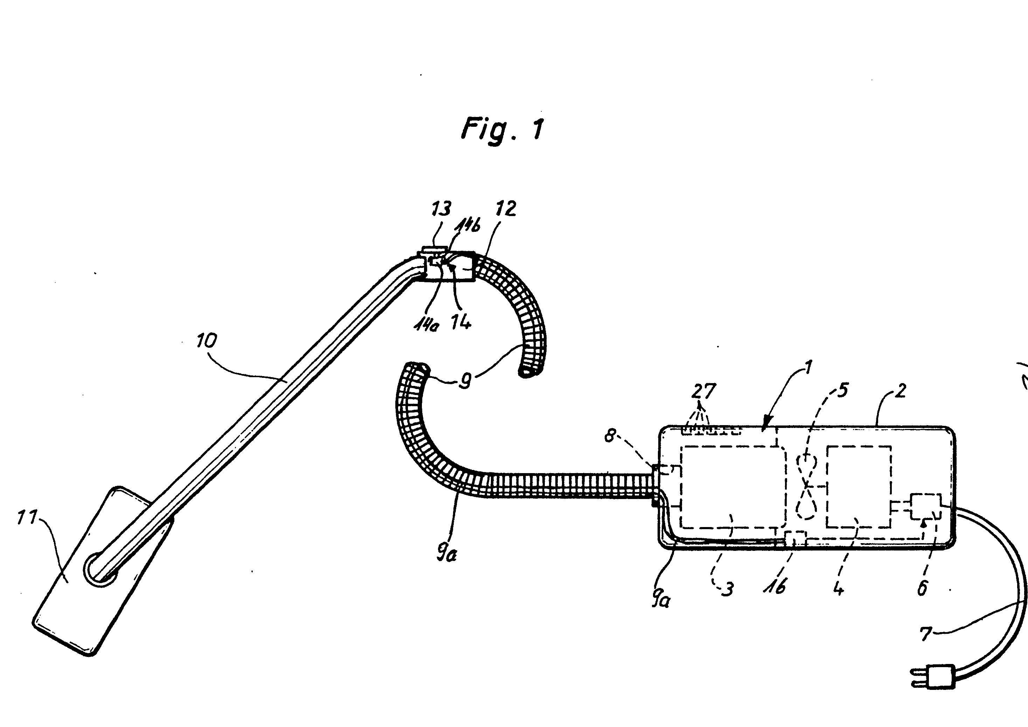

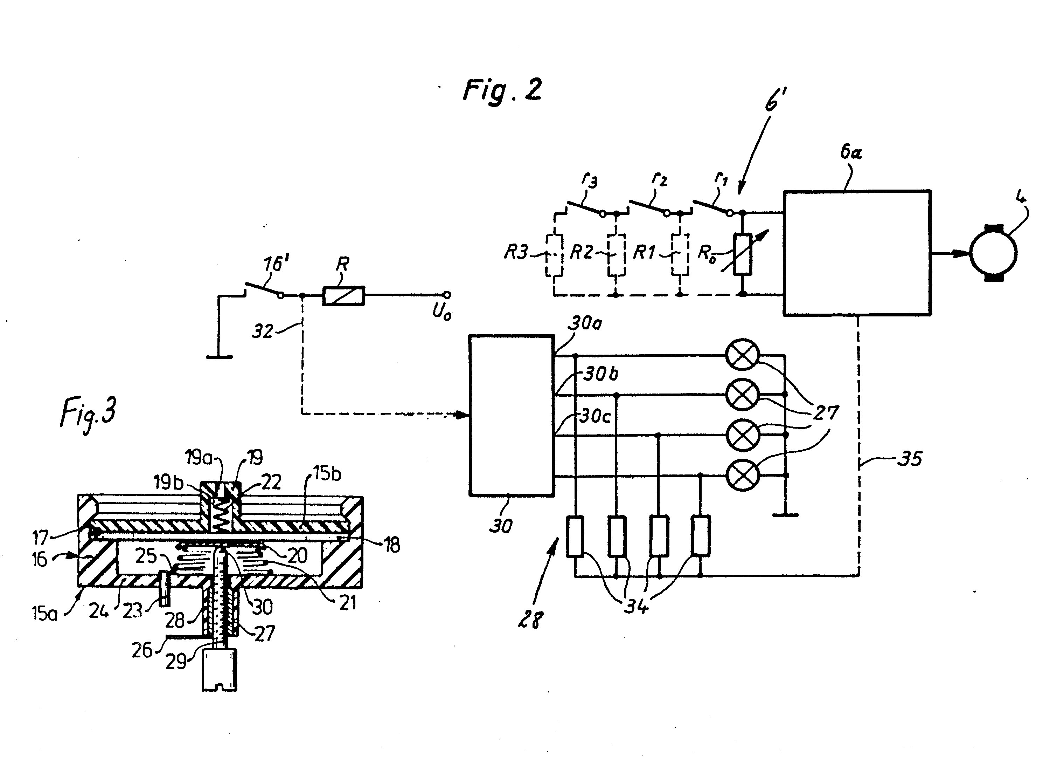

In Fig. 1 ist der Staubsaugerkörper mit 1 bezeichnet; er umfaßt in stark schematisierter Darstellung ein Gehäuse 2, in welchem eine Staubbeuteleinrichtung 3, das vom Motor 4 angetriebene Gebläse 5 und die elektrische oder elektronische Drehzahlsteuerungseinrichtung 6 angeordnet sind. Diese elektronische Drehzahlsteuerungseinrichtung 6 ist bei 6' in Fig. 2 nochmals herausgezogen detailliert dargestellt und dient der willkürlich veranlaßten, stufigen Leistungsumschaltung in mindestens zwei, vorzugsweise aber in eine größere Anzahl gut unterscheidbarer Leistungsbereiche entsprechend unterschiedliche Drehzahlstufen des Antriebsmotors für das Staubsaugergebläse 5.

In der Darstellung der Fig. 1 sind bei 27 noch eine Reihe von Anzeigelämpchen im Bereich des Staubsaugerkörpers 1 dargestellt, die die jeweils durch bewußte Umschaltung vorgegebene, vom Staubsauger-Antriebsmotor eingehaltene Leistungsstufe anzeigen; die
Steuerbefehle für diese Umschaltungen werden im Bereich des Handgriffs von der Bedienungsperson erzeugt.

In Vervollständigung der Darstellung der Fig. 1 ist bei 7 noch ein
Anschluß an eine externe Stromquelle dargestellt; die Saugmündung 8
des Staubsaugers ist über eine flexible Kunststoff- oder Metalleitung
9, üblicherweise ein Wellschlauch o.dgl., mit einem starren Rohr 10
verbunden, an dessen Ende sich eine Saugbürste 11 oder ein ähnliches
Gerät befindet. Am Übergang zwischen der flexiblen Schlauchleitung 9
und dem starren Rohr 10 befindet sich bei dem dargestellten Ausführungsbeispiel der Handgriff 12, der von der Bedienungsperson
beim Betrieb des Staubsaugers erfaßt wird. In diesem Handgriffbereich befindet sich daher vorzugsweise die Signalgabe- oder Tipp-
Tasteneinrichtung 14, umfassend einen druckschalterartigen Knopf
13, der zur Umschaltung in eine jeweils andere Leistungsstufe von
der Bedienungsperson dann zeitweilig niedergedrückt wird. Der Knopf
steuert durch mechanische Einwirkung besonders empfindliche Membranmittel an, die hierdurch entsprechend willkürlich hervorgerufene
Druckschwankungen erzeugen und diese über eine Steuerschlauchleitung 9a zu einem entsprechend ausgebildeten Druckschwankungssensor 16 innerhalb des Staubsaugergehäuses 1 weiterleiten.

Die Einrichtung zur Erzeugung der Signaldruckschwankungen kann
aus einem Membrangehäuse 14a mit einer dieses abdeckenden Membran 14b bestehen, wobei auf die Membran einwirkend und diese zur Volumenveränderung kurzzeitig ohne größere Krafteinwirkung zur lediglichen Druckimpulsgabe in den Gehäusebereich hineindrückend der Druckschalter 13 entsprechend mechanisch ausgebildet ist oder entsprechende mechanische Verlängerungen oder Druckstößel umfaßt. Hierdurch ergibt sich eine Druckerhöhung innerhalb des Membrangehäuses, die sich über einen Anschluß innerhalb der Steuerschlauchleitung 9a fortpflanzt und vom Membranschalter 16 erfaßt wird.

Die Steuerschlauchleitung ist mindestens so flexibel wie die flexible Schlauchleitung 9 zur Übertragung des Arbeitsdrucks ebenfalls und kann daher in inniger Verbindung mit dieser ausgebildet sein; es ist möglich, diese entweder einfach in Längsrichtung auf der Schlauchleitung 9 zu befestigen oder den in üblicher Weise spiralförmig verlaufenden äußeren Rillen folgend in diese einlegen, wobei Untersuchungen ergeben haben, daß die Länge der Steuerschlauchleitung auch bei extremen Ausdehnungen von 10 oder 20 m bezüglich der Signaldruckübertragung ohne Belang ist.

Schließlich ist es entsprechend einem bevorzugten Ausführungsbeispiel auch möglich, bei der Herstellung der flexiblen Schlauchleitung 9 einen separaten Schlauchbereich mit sehr kleiner lichter Innenöffnung gleich mit einzugießen, herzustellen oder anzuformen, dann mit beidseitigen Anschlußnippeln zu den Drucksender- und -empfängereinrichtungen.

Bei Betätigung des Druckknopfes 13 ergibt sich in der Steuerschlauchleitung ein vorübergehender, im Grunde sehr geringer Druckanstieg in der Größenordnung von lediglich einigen mm WS, typischerweise zwischen 2 bis 10 mm WS, der auf den Membranschalter 16 als Druckempfänger so einwirkt, daß dieser hierdurch eine sinnvollerweise ebenfalls vorübergehende elektrische Kontaktgabe bewirkt. Auf eine bevorzugte Ausführungsform eines solchen Membranschalters wird weiter unten in Verbindung mit der Darstellung der Fig. 3 noch eingegangen.

Zunächst werden im folgenden die Möglichkeiten der Einflußnahme auf die stufige Umschaltung der Drehzahlsteuerung unter der Wirkung des empfängerseitigen Membranschalters eingegangen.

Entsprechend der Darstellung der Fig. 2 kann die Drehzahlsteuerung 6' für den Gebläseantriebsmotor 4 so ausgebildet sein, daß sie in für sich gesehen bekanntem Aufbau elektrische oder elektronische Schaltungselemente, nämlich Thyristoren mit Ansteuerung über Diacs enthält, die allgemein im Sinne einer Phasenanschnittsteuerung arbeiten und wobei mindestens ein Widerstand vorgesehen ist, der durch seinen Widerstandswert bestimmt, mit welchem Phasenanschnittswinkel bei der Ansteuerung der Thyristoren gearbeitet wird, mit anderen Worten, der durch seinen einstellbaren Widerstandswert die vom Antriebsmotor 4 abgegebene Leistung in entsprechender Abstufung regelt. Ein solcher Widerstand ist in Fig. 2 mit Ro bezeichnet und kann auch als selbst nochmals stufig veränderbarer Widerstand ausgebildet sein, wenn in den jeweiligen, willkürlich angesteuerten Leistungsstufen nochmals eine automatische Drehzahlsteuerung erfolgen soll, die über separate Membran-Sensorschalter jetzt auf den effektiven Arbeitsunterdruck des Staubsaugers reagiert.

Dies ist jedoch nicht Gegenstand vorliegender Erfindung, so daß hierauf nicht weiter eingegangen wird.

Der Empfänger-Membranschalter 16 erzeugt, wie schon erwähnt, bei einer Druckänderung in der Steuerschlauchleitung eine elektrische Kontaktgabe; mit anderen Worten, das Schließen des von diesem Membranschalter gebildeten elektrischen Schalterteils 16' kann dazu verwendet werden, im zyklischen Umlauf verschiedene, vorzugsweise auch über die Lichtleiste 27 am Staubsaugergehäuse anzeigbare Betriebszustände einzuschalten, wobei auf die Häufigkeit der Schaltkontakte, also auf die Anzahl der durch das Ansprechen des Membranschalters bewirkten Kontaktgaben bei einem ersten Ausführungsbeispiel etwa ein Relais R wiederholt an seine Versorgungsspannung Uo gelegt werden kann. Dieses Relais R kann als Schnittschaltrelais ausgebildet sein und schließt dann bei jedem neuen Anziehen fortlaufend weitere Relaiskontakte $r_1$, $r_2$, $r_3$ ..., wobei die ursprünglich geschlossenen Kontakte bei weiterem Anziehen entweder geschlossen bleiben oder auch wieder geöffnet werden können, je nach Auslegung des die Relaiskontakte $r_1$, $r_2$ ... schaltenden Schnittschaltrelais. Die Relaiskontakte $r_1$, $r_2$ schalten dem Grundwiderstand Ro weitere, in geeigneter Weise auf die elektronische Phasenanschnittsteuerung 6a Einfluß nehmende Widerstände R1, R2, R3 ... zu. Man erkennt, daß sich hierdurch eine Vielzahl von stufigen Leistungsumschaltungen ergeben können, je nach Wunsch und Auslegung.

Eine alternative Möglichkeit zur Auswertung von Kontaktgaben des Schalters 16 ist schematisch bei 28 dargestellt; diese Lösung arbeitet im wesentlichen auf digitaler Basis und umfaßt einen Zähler 30, der auf die Kontaktgaben des Schalters 16' jeweils durch Änderung seines Zählstandes reagiert und beispielsweise so ausgelegt sein kann, daß jeder ihm vom Schalter 16' zugeführte Zählimpuls entweder einen seiner Ausgangsanschlüsse 30a, 30b, 30c ... hochlegt oder durchlaufend immer mehr Ausgangsanschlüsse in einen vorgegebenen, gemeinsamen Zustand (logisch 0 oder logisch 1) umgeschaltet werden. Hierdurch werden jeweils unterschiedliche oder gleiche Widerstände 34 in einer ergänzenden Steuerleitung 35 zur Drehzahlsteuerung 6a geschaltet, gegebenenfalls in entsprechender Weise gleich die Anzeigelampen 27 angesteuert und so die manuelle stufige Umschaltung in den jeweils gewünschten Leistungsbereich des Staubsaugerantriebs vorgenommen.

Ein bevorzugtes Ausführungsbeispiel eines senderseitigen, die gewünschten Kontaktgaben erzeugenden Membranschalters ist in Fig. 3 dargestellt. Bei diesem Membranschalter handelt es sich um einen besonders empfindlichen und gut auf Druckschwellen einstellbaren Membranschalter, Eigenschaften also, die auch bei dem geschlossenen und abgedichteten System der Drucksignalübertragung vorteilhaft zur Geltung kommen können. Zum Verständnis der vorliegenden Erfindung wird auf den Membranschalter der Fig. 3 nur noch kurz eingegangen. Der Membranschalter umfaßt ein topfförmiges erstes Gehäuseteil 15a sowie einen Deckel 15b. Der ringförmig erhabene Wandbereich des Gehäusetopfes verfügt über eine innere Ringnut 17, die mittels eines vorspringenden Absatzes sowohl die sehr dünne, nachgiebige und schlaffe Membran 18 in ihrem Randbereich lagert, als auch den scheibenförmigen Deckel 15b, der über einen zentralen ersten Stutzen 19 verfügt mit einer vorzugsweise abgetreppten Durchtrittsbohrung 19a, die auf die eine Seite

/16

der Membran 18 führt. Die Abmessungen des Deckels 15b und der diesen aufnehmenden und lagernden Ringnut sind so ausgebildet, daß der Deckel 15b nach Einlage der Membran 18 in die Ringnut 17 unter Krafteinwirkung eingeschnappt werden kann, wodurch sowohl der Deckel fest und unverrückbar gehalten als auch gleichzeitig die Membran 18 an ihrem Randbereich eingeklemmt und gelagert wird.

Von unten in der Zeichenebene gesehen liegt an der Membran 18 ein Kontaktteller 20 an; er kann an der Membran auch durch Klebung o. dgl. befestigt sein. Gegen diesen Kontaktteller drückt eine Vorspannungsfeder 21 auf die Membran und drückt diese nach oben, wobei bei einem erweiterten Bohrungsteil 19b des Deckelstutzens 19 noch eine weitere Feder 22 angeordnet sein kann, um die Membran in eine definierte Ausgangslage zu bringen. Die Feder 21 bildet gleichzeitig das elektrische Übertragungsmittel zu einem ersten Kontaktanschluß 23, der als in den Boden 24 des Gehäusetopfes 15a eingelassener oder eingesetzter Kontaktzapfen 23 ausgebildet sein kann. Der Kontaktzapfen berührt bei 25 die mit dem Kontaktteller 20 in elektrischer Verbindung stehende Vorspannungsfeder 21 und bildet so einen ersten Anschluß, beispielsweise Lötstift für elektrischen Schalter.

Der andere Pol wird von einer Lötfahne 26 gebildet, die angeordnet oder einstückiger Teil einer metallischen Büchse 27 sein kann, die in einen nach unten am Gehäuseboden vorspringenden und vorzugsweise mit diesem aus einem einstückigen geeigneten Kunststoff bestehenden Stutzen 28 eingesetzt ist. Die Büchse 27 verfügt über ein

/17

Innengewinde und nimmt einen Schraubstift 29 auf, der bei gleichzeitiger einwandfreier Abdichtung im Gewindebereich den Gehäuseboden durchsetzt und mit einer Kontaktspitze 30 im Abstand zur von
der Membran 18 angetriebenen Kontaktplatte 20 angeordnet ist. Der
Deckelstutzen 19 dient der Verbindung mit dem anderen Ende der
Steuerschlauchleitung; ein entsprechender Druckimpuls treibt die
Membran nach unten an und bringt den Kontaktteller in elektrische
Verbindung mit der Kontaktspitze des Schraubstifts 29.

Dipl.-Ing. **Peter Otte**
Patentanwalt

7250 Leonberg
Tiroler Straße 15

0178335

1829/ot/sei
12.10.1984

herr Gerhard Kurz, Bruckenäcker 11, 7000 Stuttgart 80

Patentansprüche

1. Vorrichtung zur manuellen, pneumatischen Betätigung eines einen elektrischen Motor aufweisenden Staubsaugers, wobei getrennt zu dem den Arbeitsunterdruck übertragenden Saugschlauch eine separate, jedoch dem Verlauf des Saugschlauchs folgende, den Steuerdruck übertragende Steuerleitung vorgesehen ist, die einerseits mit einem Drucksender und andererseits im Bereich des Staubsaugergehäuses mit einem Druckempfänger verbunden ist, dadurch gekennzeichnet, daß zur Leistungsumschaltung der Drucksender (14) aus einer durch eine Tipp-Tasteneinrichtung betätigbaren Membran und der Druckempfänger (16) aus einer direkt elektrische Kontakte betätigenden Membran besteht, deren elektrische Impulse über eine elektrische oder elektronische Auswerteinrichtung aufeinanderfolgend eine Mehrfachleistungsumschaltung bewirken.

2. Vorrichtung nach Anspruch 1, dadurch gekennzeichnet, daß dem Druckempfänger (16) ein Schrittschaltrelais (R) nachgeschaltet ist, welches entsprechend den elektrischen

/2

Impulsen aufeinanderfolgend Relaiskontakte ($r_1$, $r_2$, $r_3$ ...) betätigt zur abgestuften Widerstandssteuerung im Steuerkreis einer Phasenanschnitt-Drehzahlsteuerung (6a) für den elektrischen Motor, gegebenenfalls gleichzeitig mit Ansteuerung von die jeweils erreichte Leistungsstufe kenntlichmachenden Anzeigeleuchten (27).

3. Vorrichtung nach Anspruch 1, dadurch gekennzeichnet, daß ein elektrischer Zähler (30) vorgesehen ist, dem die elektrischen Impulse als Zählimpulse zugeführt sind und mit dessen Ausgängen (30a, 30b, 30c ...) eine Widerstands- oder Diodenmatrix zur Bildung eines jeweils veränderbaren Ansteuersignals für die elektronische Drehzahlsteuerung (6a) verbunden ist.

4. Vorrichtung nach einem der Ansprüche 1 bis 3, dadurch gekennzeichnet, daß der Druckempfänger als Membranschalter mit einem topfförmigen, von der Membran (18) abgedeckten Gehäuseteil (15a) ausgebildet ist, daß in dem so gebildeten Hohlraum ein von einer Vorspannungsfeder (21) gegen die Membran (18) gedrückter Kontaktteller (20) angeordnet ist und das im justierbaren Abstand zur Kontaktplatte (20) ein erstes Kontaktelement (Schraubstift 29) und im elektrischen Kontakt mit der Vorspannungsfeder (21) ein zweites Kontaktelement (Kontaktzapfen 23) angeordnet sind derart, daß bei Druckeinwirkung auf die von einem Deckel (15b) mit Druckanschlußstutzen (19) abgedeckten Membran (18) die elektrische Kontaktgabe erfolgt.

0178335

Fig. 1

Fig. 2

Fig. 3

6'

6a

$r_3$    $r_2$    $r_1$

$R3$    $R2$    $R1$    $R_o$

16'    R

32    $U_o$

30a
30b
30c
30
28
34
35
27
28

19a    19
19b    22    15b
17
18
16
25    20
15a    24    23    21
28
26    30
29    27

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-A-3 312 434 (LICENTIA PATENT-VERWALTUNS-GmbH) * Insgesamt * --- | 1 | A 47 L 9/28 |
| Y | DE-A-3 307 002 (G. KURZ) * Insgesamt * | 1 | |
| A | | 2-4 | |
| | --- | | |
| A | DE-A-3 307 006 (G. KURZ) * Insgesamt * --- | 1-4 | |
| A,D | FR-A-2 243 670 (HOOVER LTD.) | | |
| | ----- | | |

| | |
|---|---|
| RECHERCHIERTE SACHGEBIETE (Int. Cl.4) | |
| A 47 L | |

Der vorliegende Recherchenbericht wurde für alle Patentansprüche erstellt.

| Recherchenort | Abschlußdatum der Recherche | Prüfer |
|---|---|---|
| DEN HAAG | 25-06-1985 | MUNZER E. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82